Europäisches Patentamt

European Patent Office

Office européen des brevets

(19)

(11) Publication number: 0 339 640

A1

(12) # EUROPEAN PATENT APPLICATION

(21) Application number: 89107646.5

(22) Date of filing: 27.04.89

(51) Int. Cl.4: B01J 21/06 , B01D 53/36

| | |
|---|---|
| Claims for the following Contracting State: ES. | (71) Applicant: **The Harshaw Chemical Company** **CN 40, Menlo Park** **Edison, New Jersey 08818(US)** |
| (30) Priority: 28.04.88 US 187196 | |
| | (72) Inventor: **Rigge, Ronald J.** **2257 Goldcrest Circle** **Pleasanton California 94566(SU)** |
| (43) Date of publication of application: **02.11.89 Bulletin 89/44** | Inventor: **Belding, William A.** **4098 Wells Street** **Pleasanton California 94566(SU)** |
| (84) Designated Contracting States: **AT BE CH DE ES FR GB GR IT LI LU NL SE** | Inventor: **Graham, James R.** **11117 Tilton Circle** **Fountain Valley California 92708(SU)** Inventor: **Yanik, Steve J.** **5910 Jadeite Street** **Alta Loma California 91701(SU)** |
| | (74) Representative: **Abitz, Walter, Dr.-Ing. et al** **Abitz, Morf, Gritschneder, Freiherr von** **Wittgenstein Postfach 86 01 09** **D-8000 München 86(DE)** |

(54) Alumina-titania composition.

(57) An alumina-titania composite, suitable for catalysts and catalyst supports, is made by controlled coprecipitation of the alumina and titania constituents of the composite. The composite contains from about 0.5% up to about 50% by weight titania (based on the total weight of the composite). The titania content of the composite, due to the controlled precipitation, is distributed throughout the composite in such a uniform manner that the average size of the titania particles is below about 50 angstroms and the individual titania particles cannot be observed by X-ray diffraction examination of the calcined composite. Due to the uniform distribution of the titania content in the composite, the composite exhibits significantly improved catalytic properties in comparison to conventionally prepared alumina-titania compounds.

FIG._3.

EP 0 339 640 A1

## ALUMINA-TITANIA COMPOSITION

### Background of the Invention

This invention relates to a novel alumina-titania composite and, more particularly, it relates to a coprecipitated alumina-titania composite where the distribution of the titania particles within the composite is characterized by a highly uniform pattern. The uniformity of constituent distribution is demonstrated through X-ray diffraction examination of the calcined composite which cannot distinguish between the alumina matrix and the titania particles distributed within the matrix.

Alumina-titania composites and methods for their preparation have been known for many years. Many of the alumina-titania composites were employed as substrates for hydrodesulfurization catalyst where the composite was further combined with other catalytic metals, such as nickel and molybdenum, before employed in the hydrodesulfurization reaction. Alumina-titania composites were further employed directly as catalysts in the well-known Claus process due to their high stability and resistance to sulfur poisoning.

Preparation of these prior art catalysts conventionally proceeded by impregnation of the alumina base with a titanium compound, such as an acidic solution of a titanium salt, for example titanium tetrachloride ($TiCl_4$), followed by a thermal treatment to decompose the titanium salt to titania ($TiO_2$). Impregnation of the alumina constituent with the titanium salt and subsequent thermal decomposition results in a composite of suitable catalytic properties and the composite can be readily employed either as a catalyst substrate or directly as a catalyst. While impregnation is a useful method for the incorporation of titania in the alumina, its usefulness is limited because the titania cannot be incorporated in the alumina matrix. In most instances, impregnation results in alumina-titania composites containing less than the desired amount of titania. Consequently, if high titania contents are required in the alumina-titania composite, highly concentrated titania salt solutions have to be employed to assure that the desired concentration is achieved in the composite. There is always an uncertainty regarding the final titania concentration achieved by this process.

Alumina-titania composites have also been prepared by admixture of the alumina component with a powdered titanium compound, such as $TiO_2$. Admixture of the two solids in the required ratios can result in a catalyst or catalyst substrate of desired titania content; however, the uniformity of the titania distribution within the alumina matrix is definitely less desirable than in the case of impregnation. Additionally, in case of physical admixture, each of the individual components must be of substantially equal particle size and/or particle size distribution in order to ensure uniformity of the mixture. This requires extensive labor and expensive equipment. Notwithstanding the availability of suitable grinding and mixing equipment, uniformity of the composite from batch-to-batch is not assured.

Coprecipitation techniques for the preparation of alumina-titania supports or catalysts were not preferred by the prior art. The reasons for selecting methods other than coprecipitation for the preparation of alumina-titania composites resides in the solubility of the commonly employed titanium salts. For example, when titanium tetrachloride is used as the titania precursor in the alumina matrix, the titanium salt has to be dissolved in an organic solvent. As a result, the alumina salt used has also to be soluble in an organic medium. Even if both the aluminum and titanium salts are dissolved in organic solvents, the produced composite, apart from the economics of using organometallic starting compounds, lacks the desired uniformity as far as the titania distribution within the alumina matrix is concerned. The reason for this lack of uniformity resides in the differing rates of decomposition and the difficulty of controlling the decomposition at the usual processing temperatures. Additionally, the use of organometallics may involve environmental and health considerations, which reduce the attractiveness of the coprecipitation process employing organometallics.

It has now been discovered that a coprecipitated alumina-titania composite, generally containing titania in excess of about 0.5% by weight and up to about 50% by weight, can be readily prepared using inorganic alumina and titania starting materials. The calcined composite, prepared by the instant method, exhibits such uniform distribution of the constituents that X-ray diffraction testing of the calcined composite fails to detect the titania in the alumina matrix. This uniform distribution of constituents assures significantly improved performance for the composite when employed either as a catalyst substrate or as a catalyst.

### Summary of the Invention

2

An alumina-titania composite, containing uniformly distributed titania in an amount within the range from about 0.5% up to about 50% by weight (calculated as $TiO_2$ and based on the weight of the composite), is prepared by coprecipitating inorganic aluminum and titanium salts. The coprecipitated composite in calcined condition is characterized by such a uniform distribution of the constituents that X-ray diffraction testing is incapable of differentiating between the alumina and titania particles.

## Brief Description of the Drawings

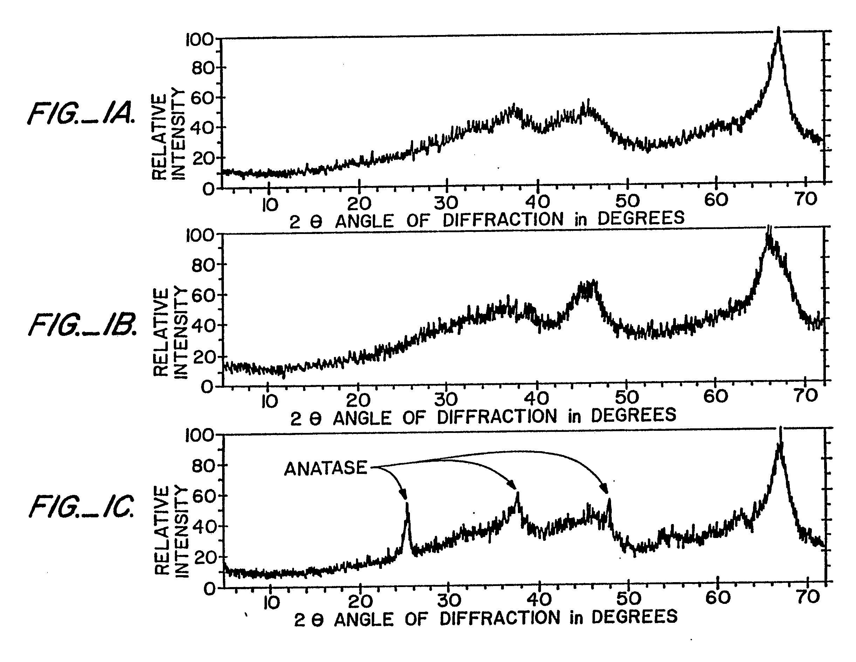

Figure 1 shows the X-ray diffraction patterns of alumina-titania composites prepared by conventional methods and by the instant coprecipitation process. Figure 1A shows the X-ray diffraction pattern of a coprecipitated alumina-titania composition containing 15% by weight titania uniformly distributed in the alumina matrix and exhibiting no anatase peak; Figure 1B shows the X-ray diffraction pattern of an alumina-titania coprecipitated composition containing 40% by weight titania uniformly distributed in the alumina matrix and exhibiting no anatase peak; and Figure 1C shows the X-ray diffraction pattern of a conventional alumina-titania composite, prepared by impregnation and containing 15% titania by weight. The X-ray diffraction pattern for the composite, made by impregnation, shows the presence of anatase.

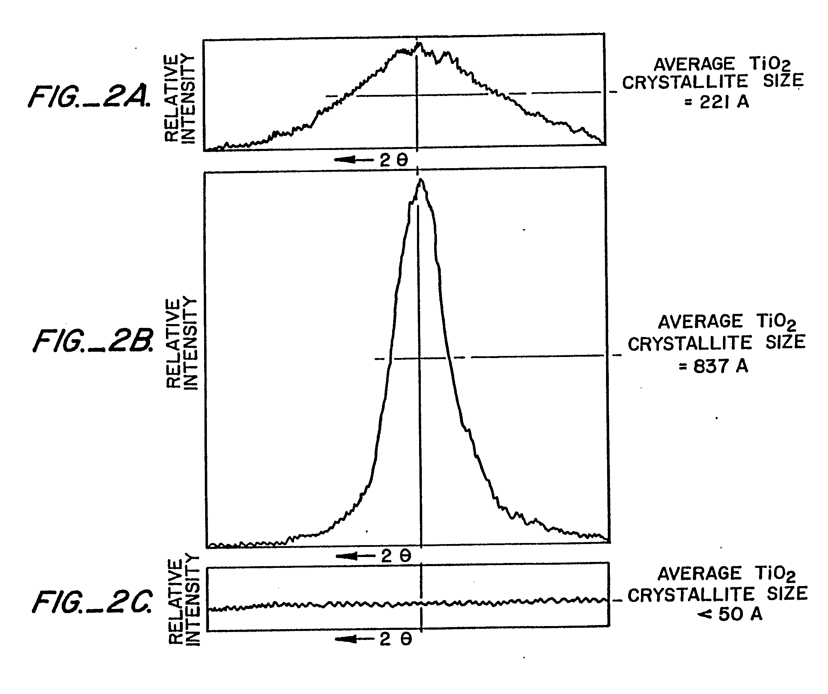

Figure 2 shows a comparison of titania crystallite sizes in alumina-titania composites prepared by different methods. Figure 2A depicts the titania crystallite size in an alumina-titania composite prepared by physical admixture of alumina and titania powders by means of an aqueous slurry; Figure 2B shows the average titania particle size in an alumina-titania composite prepared by admixture of alumina and titania powders; and Figure 2C shows the average titania particle size in an alumina-titania composite prepared by coprecipitation according to the invention.

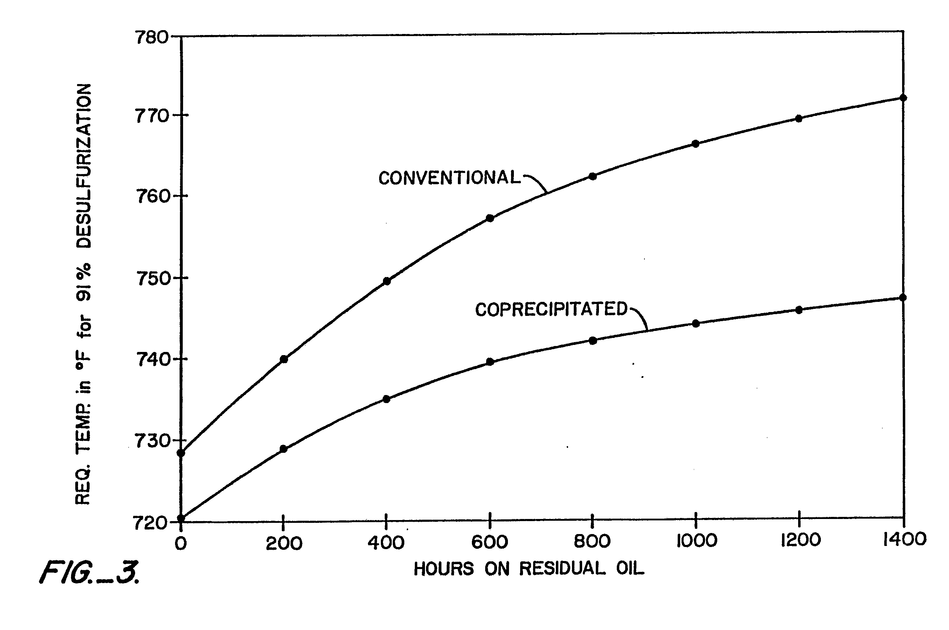

Figure 3 shows the activity of the novel, coprecipitated alumina-titania catalyst in resid upgrading in comparison to conventionally prepared commercial aluminatitania catalyst.

## Detailed Description of the Invention

This invention relates to the preparation of a novel alumina-titania composites. More particularly, this invention concerns a novel alumina-titania composite containing from about 0.5% up to about 50% titania, preferably from about 10 to about 25% by weight (calculated as $TiO_2$ and based on the total weight of the composite), prepared by coprecipitation from water-soluble aluminum and titanium salts. The produced alumina-titania composite is characterized by the uniform distribution of the titania within the alumina matrix, the uniformity being determined by the inability to detect the presence of titania particles in the matrix by X-ray diffraction tests.

Suitable aluminum salts utilized in the coprecipitation include the water-soluble alkali salts of aluminum, for example sodium or potassium aluminates of the general formula $MAlO_2$. The concentration of the alkali aluminate solutions employed in the coprecipitation is suitably selected to be in the range from about 300 g/l to about 500 g/l, calculated as $M_2CO_3$ g/l where M can be either Na or K. If desired, acidic, water-soluble aluminum salts, such as $AlCl_3$, $Al_2SO_4$ or $AlNO_3$, can also be utilized in the preparation of the aluminum-titanium composite.

The water-soluble titanium salts employed in the preparation of the instant coprecipitated alumina-titania composite include titanium trichloride ($TiCl_3$) and titanium oxychloride or oxysulfate ($TiOSO_4$ or $TiOCl_2$). The concentration of the titanium salts utilized in the instant coprecipitation process are suitably selected to be in the range from about 10 g/l to about 180 g/l calculated as Ti.

The preparation of the coprecipitated alumina-titania composite can be accomplished either in a batchwise, semi-continuous or continuous manner. Regardless of which type is utilized for the preparation of the composite, care is to be taken to combine the two aqueous streams of reactants in a predetermined ratio in order to obtain the desired titania content in the composite.

The temperatures utilized in the preparation of the coprecipitated alumina-titania composite are generally below 100° C, preferably below about 90° C. A suitable temperature range, within which the formation of the coprecipitated alumina-titania composite proceeds at a reasonable rate, was found to be within 20-70° C. Temperatures, lower than about 20° C can also be employed, but at these temperatures the rate of alumina-titania formation may be unacceptably low from a commercial point of view.

To obtain the desirable titania distribution within the alumina matrix, the pH of the coprecipitation should be controlled within the pH range from about 4 to about 10, preferably from 6 to 9. Control of pH can be achieved by adjustment of the pH of one or both streams, by addition of the reactants at a controlled rate or in case of a continuous coprecipitation process by controlled recycling of the already reacted mixture to the coprecipitation reaction. The pH control to be employed in the instant coprecipitation reaction is within the discretion of the operator of the process and any conventional process may be utilized provided the desired pH range is achieved during the coprecipitation reaction.

Once the coprecipitation reaction is complete the alumina-titania composite is recovered from the reaction mixture. Recovery of the solid alumina-titania product can be achieved by conventional means, for example by filtration, centrifugation or by using settlers for the separation of the solid product from the mother liquid.

The recovered solids are generally washed to remove adhered reactants, then dried at temperatures sufficient to remove any liquid from the surface of the alumina-titania product. Drying is usually accomplished at temperatures in excess of about 100° C when the drying is at atmospheric pressure or moisture removal can be accomplished by using vacuum or a combination of heat and vacuum.

The alumina-titania composite prepared in accordance with the guidelines set forth hereinabove exhibits a titania content uniformly distributed within the alumina matrix and thus exhibits unexpectedly high catalytic activity which makes it eminently suitable for the preparation of catalysts or catalyst supports.

In the event the alumina-titania composite of the instant invention is to be utilized as a catalyst, for example as a Claus catalyst for the removal of organic sulfur compounds from offgases, then the composite is calcined at a temperature in excess of about 300° C to stabilize its properties by converting the alumina phase to gamma or other stable alumina form. The composite may also be shaped either before or after calcination, for example spheres, extrudates or other well-known shapes may be prepared depending on the nature of the intended use of the high activity alumina-titania catalyst.

If the alumina-titania composite is to be utilized in the petroleum refining field, the substrate can be impregnated with metals, such as metals of Group VI, Group VIII, Group IVB of the Periodic Table. Thus, for example if the alumina-titania composite of the invention is used as a substrate for the preparation of alumina-nickel-titania-molybdenum catalyst or for alumina-zirconia-titania catalyst, then the coprecipitated composite can be shaped into any desired shape by conventional techniques and then impregnated with the additional catalytic promoter(s). Shaping can take place before the alumina-titania composite is combined with the additional promoter(s), or after the promoter has been added to the composite. The preparation of the catalyst can proceed in the conventional manner, for example by impregnation of the alumina-titania composite with the promoter, or by physical admixture of the promoter with the composite. If desired the composite can be calcined prior to the incorporation of the promoter, or after the incorporation of the promoter; and in some instances calcination both before and after is desirable. In any event, the alumina-titania composite prepared in accordance with the present invention, exhibits significantly improved activity over the prior art alumina-titania composites which makes it eminently suitable for being used as a catalyst or catalyst support.

The following examples will better illustrate the present invention, some preparation and use examples are given, which in no way are intended to be limiting the scope of the invention.

Example I

An alumina-titania composite was prepared using an aqueous solution of $NaAlO_2$ as the alumina source and an aqueous solution of $TiOCl_2$ as the titania source. The sodium aluminate solution, containing 360 g/l $Al_2O_3$ and 500 g/l $Na_2CO_3$, was introduced in a reactor at the rate of 500 ml/min., while the titanium oxychloride solution, containing about 118 g/l Ti, was introduced into the reactor at the rate of about 125 ml/min. In order to obtain the proper pH in the reaction mixture, 31% by vol. HCl was added to the reactor at the rate of about 350 ml/min. The reactor temperature was maintained at about 50-57° C during the reaction. After 40 minutes of vigorous mixing the formed alumina-titania solids were separated from the mother liquor by filtration and the composite was analyzed.

The composite had a titania content of 13.4% by weight, calculated as $TiO_2$, (calcined at 1000° C), a loss on ignition of 26% by weight and a BET surface area after calcination at 600° C for 1 hour of 275 m²/g. When the calcined composite was subjected to X-ray diffraction analysis, using copper Kα alpha radiation, the presence of titania, due to a particle size below about 50 angstroms and the highly uniform dispersion of these particles within the alumina matrix, could not be detected. In contrast, alumina-titania composites prepared by conventional methods, such as physical admixture, using varying quantities of titania, exhibited anatase peaks when tested by X-ray diffraction. The presence of the anatese peak indicated the nonuniformity of the admixture. The X-ray diffraction comparison of the differing alumina-titania composites is shown in Figure 1. The crystallite size of the titania in the differing alumina-titania composites was also compared. The results of the comparison are graphically shown in Figure 2.

## Example II

Preparation of the novel alumina-titania coprecipitated composite was repeated using $TiOSO_4$ as the titanium salt. The reaction conditions described in the previous Example were utilized in this case as well, including the pH and temperature conditions. The produced alumina-titania composite was analyzed and the analysis provided the following data. The titania content was 10.0% by weight, calculated as $TiO_2$, when calcined at 1000° C, the surface area was 261 m²/g after calcination for 1 hour at 600° C and the composite had a loss on ignition of about 30.3% by weight when subjected to calcination for 1 hour at 1000° C. X-ray diffraction analysis of the calcined composite indicated uniform distribution of the titania within the alumina matrix since no peak, characteristic for anatase, was observable.

## Example III

A coprecipitated alumina-titania composite, prepared in accordance with the method disclosed in Example I, was utilized for the preparation of an extruded Ni-Ti-Mo hydro-desulfurization catalyst. 1989 g alumina-titania composite, having a volatile content of 24.6% by weight and 15% by weight $TiO_2$ content, was placed in a "Simpson Mix-Muller" apparatus and 800 ml of aqueous $HNO_3$ solution, containing about 30 g of 70% by weight $HNO_3$, was slowly added to the composite over a period of about 10-15 minutes, while mix-mulling the mixture. Mixing was continued for an additional hour and during this time period small, aliquot quantities of deionized water were added until a mass of extrudable quality was formed. The mass was then extruded through a die providing tetralobe shaped extrudates. The extruded shapes were allowed to stand in open air for about 1-2 hours, then dried in air at about 120° C overnight. The dried shapes were the calcined in the presence of steam at a temperature of about 538° C for a period of about 3 hours. The produced extruded shapes had a pore volume ($H_2O$) of 0.8 cc/g.

The extruded shapes were then prepared to be impregnated with solutions containing nickel and molybdenum respectively. The Mo-containing solution was prepared by dispersing 147.24 g of $(NH_4)_6Mo_7O_{24}.4H_2O$ in 500 ml deionized water and by gently heating the dispersion to about 40° C. To the dispersion 75 ml $NH_4OH$ solution, containing 29.5% by weight $NH_3$, was slowly added under constant stirring. Stirring was continue until a clear solution was obtained. The solution was then cooled and diluted with deionized water to a total volume of 674 ml.

The extruded shapes were then placed into a mechanical mixer and the Mo-containing solution was slowly sprayed on the shapes under continuous mixing. The wet, impregnated shapes were then allowed to stand for 1-2 hours in air, followed by drying overnight at about 120°.

The Ti and Mo-containing extruded shapes were then impregnated with a solution containing Ni. The solution was prepared by dissolving in 673.6 ml $H_2O$ sufficient $Ni(NO_3)_2$ to provide an NiO concentration of 0.241 g/ml. This solution was then applied to the dried shapes in the same manner as shown for the Mo-containing solution. The impregnated shapes were then dried overnight at 120° C followed by calcination for 2 hours at about 538° C.

The activity of the finished catalyst was then compared to the activity of a catalyst prepared by the conventional titania impregnation method in resid upgrading service. Identical test conditions were utilized for both catalysts during the tests and results obtained were compared. The results of the comparison are also shown graphically in Figure 3.

It has been found that the catalyst, prepared from the unique alumina-titania coprecipitated composite, exhibited an activity corresponding to a 50 % increase over the activity achieved with the conventionally prepared alumina-titania composite. The activity comparison was accomplished by observing the percentage increase of the rate constant for hydrodesulfurization after 800 hours. The results of the comparative test are also shown graphically in Figure 3.

Example IV

The alumina-titania composite, prepared by the novel coprecipitation method disclosed herein, was also utilized as a catalyst in the well-known Claus process for the conversion of the organic sulfur compounds to $H_2S$ and sulfur. It was found, that when the activity of the coprecipitated alumina-titania catalyst was compared to the activity of a conventionally prepared alumina-titania Claus catalyst (prepared by physical admixture of the alumina and titania components in the same weight ratio as found in the coprecipitated composite) the conversion of the organic sulfur compounds, determined by measurement of the rate of conversion, was achieved at a lower temperature (indicating increased activity), than was required for the conventional alumina-titania Claus catalyst. The results of the comparison study are shown in the Table.

Table

| Conversion of $CS_2$ by Alumina-Titania Composites | | |
| --- | --- | --- |
| Alumina - Titania Composite Type | Conversion | |
| | 320°C | 340°C |
| 1. Alumina dipped in $TiCl_4$ soln. (12.8% $TiO_2$ in composite) | - | 61% |
| 2. Alumina dipped in $TiCl_4$ soln. (13.3% $TiO_2$ in composite) | - | 39% |
| 3. Physical admixture of alumina and titania (11.0% $TiO_2$ content in composite) | 41% | 85% |
| 4. Coprecipitated alumina-titania (13.4% $TiO_2$ content in composite) | 85% | 97% |

It can be clearly observed from the results shown in the Table that the coprecipitated alumina-titania composite exhibits significantly increased activities in the Claus process.

Thus, the uniform distribution of the titania component in the unique, coprecipitated alumina-titania composite, in combination with the small titania crystallite size produced by the instant coprecipitation method, results in catalyst and catalyst supports of significantly increased activity, which heretofore could not be achieved with conventional alumina-titania composites.

## Claims

1. A coprecipitated alumina-titania composite comprising from about 0.5% up to about 50% by weight titania as $TiO_2$, the titania being uniformly distributed in an alumina matrix, the average size of the uniformly distributed titania particles being below 50 angstroms, the uniformity of the distribution of the titania particles in the alumina matrix being characterized by an X-ray diffraction pattern incapable of distinguishing between the alumina and titania particles when the coprecipitated alumina-titania composite is calcined at temperatures in excess of about 300°C.

2. The alumina-titania composite of claim 1, wherein the composite is prepared by coprecipitation of a water-soluble titanium salt and a water-soluble aluminum salt.

3. The alumina-titania composite of claim 2, wherein the water-soluble titanium salt is selected from the group consisting essentially of $TiCl_3$, $TiOSO_4$, $TiOCl_2$ or mixtures thereof.

4. The alumina-titania composite of claim 2, wherein the water-soluble aluminum salt is sodium or potassium aluminate.

5. The alumina-titania composite of claim 2, wherein the water-soluble aluminum salt is an acidic aluminum salt selected from the group consisting essentially of $Al(NO_3)_3$, $AlCl_3$, $Al_2(SO_4)_3$ or mixtures thereof.

6. The alumina-titania composite of claim 1, wherein the alumina matrix of the uncalcined composite consists essentially of pseudoboehmitic alumina.

7. The alumina-titania composite of claim 1, wherein the titania content of the composite is within the range from about 10% to about 40% by weight of the composite.

8. A catalyst for the conversion of the COS, $CS_2$ and $SO_2$ content of Claus process offgases to produce environmentally harmless offgases which comprises a coprecipitated alumina-titania composite containing from about 0.5% up to about 50% by weight titania ($TiO_2$) uniformly distributed in the alumina matrix, the average particle size of the uniformly distributed titania particles being less than about 50 angstroms, the uniformity of titania distribution in the alumina matrix being further characterized by the lack of the presence of an anatase peak when the coprecipitated composite is calcined at a temperature in excess of about 300° C and subjected to X-ray diffraction analysis, the titania component of the coprecipitated composite being derived from a water-soluble titanium salt selected from the group consisting essentially of $TiCl_3$, $TiOCl_2$, $TiOSO_4$ or mixtures thereof, and the alumina matrix is produced from a water-soluble aluminum salt.

9. The catalyst of claim 8, wherein the catalyst, prior to being used for the conversion of Claus process offgases, is shaped and then calcined at a temperature in excess of about 300.

10. The catalyst of claim 8, wherein the alumina matrix of the coprecipitated composite is a pseudoboehmitic alumina.

11. A petroleum refining catalyst made from a coprecipitated alumina-titania composite, wherein the alumina-titania composite contains from about 0.5% up to about 50% by weight of titania ($TiO_2$), the titania content of the composite being characterized by an average particle size below about 50 angstroms and a uniform distribution within the alumina matrix of the composite, the uniformity of the distribution being evidenced by the absence of an anatase peak by X-ray diffraction analysis when the coprecipitated composite is calcined at a temperature in excess of about 300° C and subjected to X-ray analysis, the catalyst being further characterized by an added metal content, the added metal being selected from the group consisting essentially of Group VI, Group VIII, Group IVB metals or mixtures thereof.

12. The catalyst of claim 11, wherein the alumina-titania coprecipitated composite is shaped, then calcined, followed by impregnation with one or more metals selected from group consisting essentially of Group VI, Group VIII, Group IVB metals or mixtures thereof.

13. The catalyst of claim 11, wherein the titania content of the coprecipitated composite is in the range from about 10% to about 25% by weight.

14. The catalyst of claim 12, wherein the catalyst is a calcined, extruded, polylobal shape.

15. A process for making a coprecipitated alumina-titania composite containing from about 0.5% up to about 50% by weight titania ($TiO_2$) and characterized by a titania average particle size below about 50 angstroms, a uniform distribution of titania in the alumina matrix demonstrated by the absence of an anatase peak when the composite, calcined at a temperature in excess of about 300° C, is subjected to X-ray diffraction testing, which comprises:

(a) combining, at a temperature below 100° C, an aqueous solution of a titanium salt and an aqueous solution of an aluminum salt wherein the titanium salt is selected from the group consisting essentially of $TiCl_3$, $TiOCl_2$, $TiOSO_4$ or mixtures thereof and the aluminum salt is selected from the group consisting essentially of alkali aluminates or acidic aluminum salts,

(b) maintaining a pH during coprecipitation within the range from about 4 to about 10;

(c) recovering an alumina-titania composite by separating the precipitated alumina-titania composite from the aqueous media;

(d) washing and drying the recovered alumina-titania composite.

16. A process according to claim 15, wherein the concentration of the aqueous titanium salt solution employed for the coprecipitation process is within the range from about 10 g/l to about 180 g/l, calculated as Ti.

17. Process according to claim 15, wherein the water-soluble aluminum salt is an alkali aluminate and the concentration of the alkali aluminate solution employed in the coprecipitation reaction is within the range from about 300 g/l to about 500 g/l, calculated as $M_2CO_3$ g/l, where M is sodium or potassium.

18. Process according to claim 15, wherein the temperature of the coprecipitation is maintained within the range from about 20° C to about 70° C.

19. Process according to claim 15, wherein the pH of the coprecipitation is maintained within the range from about 6 to about 9.

20. Process according to claim 15, wherein the recovered composite is calcined at a temperature in excess of about 300° C.

21. Process according to claim 20, wherein the recovered alumina-titania composite is shaped prior to calcination.

22. Process according to claims 20 or 21, wherein the composite is impregnated with a metal-containing solution, the metal being selected from the group consisting essentially of Group VI, Group VIII, Group IVB metals and mixtures thereof.

23. Process according to claim 21 wherein the composite is employed for petroleum refining.

7

24. Process according to claim 20 or 21, wherein the composite is employed for the conversion of the COS, CS$_2$ and SO$_2$ content of Claus process offgases.


Claims for the following Contracting State: ES


1. A process for making a coprecipitated alumina-titania composite containing from about 0.5% up to about 50% by weight titania (TiO$_2$) and characterized by a titania average particle size below about 50 angstroms, a uniform distribution of titania in the alumina matrix demonstrated by the absence of an anatase peak when the composite, calcined at a temperature in excess of about 300° C, is subjected to X-ray diffraction testing, which comprises:

(a) combining, at a temperature below 100° C, an aqueous solution of a titanium salt and an aqueous solution of an aluminum salt wherein the titanium salt is selected from the group consisting essentially of TiCl$_3$, TiOCl$_2$, TiOSO$_4$ or mixtures thereof and the aluminum salt is selected from the group consisting essentially of alkali aluminates or acidic aluminum salts,

(b) maintaining a pH during coprecipitation within the range from about 4 to about 10;

(c) recovering an alumina-titania composite by separating the precipitated alumina-titania composite from the aqueous media;

(d) washing and drying the recovered alumina-titania composite.


2. A process according to claim 1, wherein the concentration of the aqueous titanium salt solution employed for the coprecipitation process is within the range from about 10 g/l to about 180 g/l, calculated as Ti.

3. Process according to claim 1, wherein the water-soluble aluminum salt is an alkali aluminate and the concentration of the alkali aluminate solution employed in the coprecipitation reaction is within the range from about 300 g/l to about 500 g/l, calculated as M$_2$CO$_3$ g/l, where M is sodium or potassium.

4. Process according to claim 1, wherein the temperature of the coprecipitation is maintained within the range from about 20° C to about 70° C.

5. Process according to claim 1, wherein the pH of the coprecipitation is maintained within the range from about 6 to about 9.

6. Process according to claim 1, wherein the recovered composite is calcined at a temperature in excess of about 300° C.

7. Process according to claim 6, wherein the recovered alumina-titania composite is shaped prior to calcination.

8. Process according to claims 6 or 7, wherein the composite is impregnated with a metal-containing solution, the metal being selected from the group consisting essentially of Group VI, Group VIII, Group IVB metals and mixtures thereof.

9. Process according to claim 7 wherein the composite is employed for petroleum refining.

10. Process according to claim 6 or 7, wherein the composite is employed for the conversion of the COS, CS$_2$ and SO$_2$ content of Claus process offgases.

11. A coprecipitated alumina-titania composite comprising from about 0.5% up to about 50% by weight titania as TiO$_2$, the titania being uniformly distributed in an alumina matrix, the average size of the uniformly distributed titania particles being below 50 angstroms, the uniformity of the distribution of the titania particles in the alumina matrix being characterized by an X-ray diffraction pattern incapable of distinguishing between the alumina and titania particles when the coprecipitated alumina-titania composite is calcined at temperatures in excess of about 300° C.

12. The alumina-titania composite of claim 11, wherein the composite is prepared by coprecipitation of a water-soluble titanium salt and a water-soluble aluminum salt.

13. The alumina-titania composite of claim 12, wherein the water-soluble titanium salt is selected from the group consisting essentially of TiCl$_3$, TiOSO$_4$, TiOCl$_2$ or mixtures thereof.

14. The alumina-titania composite of claim 12, wherein the water-soluble aluminum salt is sodium or potassium aluminate.

15. The alumina-titania composite of claim 12, wherein the water-soluble aluminum salt is an acidic aluminum salt selected from the group consisting essentially of Al(NO$_3$)$_3$, AlCl$_3$, Al$_2$(SO$_4$)$_3$ or mixtures thereof.

16. The alumina-titania composite of claim 11, wherein the alumina matrix of the uncalcined composite consists essentially of pseudoboehmitic alumina.


8

EP 0 339 640 A1

17. The alumina-titania composite of claim 11, wherein the titania content of the composite is within the range from about 10% to about 40% by weight of the composite.

18. A catalyst for the conversion of the COS, $CS_2$ and $SO_2$ content of Claus process offgases to produce environmentally harmless offgases which comprises a coprecipitated alumina-titania composite containing from about 0.5% up to about 50% by weight titania ($TiO_2$) uniformly distributed in the alumina matrix, the average particle size of the uniformly distributed titania particles being less than about 50 angstroms, the uniformity of titania distribution in the alumina matrix being further characterized by the lack of the presence of an anatase peak when the coprecipitated composite is calcined at a temperature in excess of about 300° C and subjected to X-ray diffraction analysis, the titania component of the coprecipitated composite being derived from a water-soluble titanium salt selected from the group consisting essentially of $TiCl_3$, $TiOCl_2$, $TiOSO_4$ or mixtures thereof, and the alumina matrix is produced from a water-soluble aluminum salt.

19. The catalyst of claim 18, wherein the catalyst, prior to being used for the conversion of Claus process offgases, is shaped and then calcined at a temperature in excess of about 300.

20. The catalyst of claim 18, wherein the alumina matrix of the coprecipitated composite is a pseudoboehmitic alumina.

21. A petroleum refining catalyst made from a coprecipitated alumina-titania composite, wherein the alumina-titania composite contains from about 0.5% up to about 50% by weight of titania ($TiO_2$), the titania content of the composite being characterized by an average particle size below about 50 angstroms and a uniform distribution within the alumina matrix of the composite, the uniformity of the distribution being evidenced by the absence of an anatase peak by X-ray diffraction analysis when the coprecipitated composite is calcined at a temperature in excess of about 300° C and subjected to X-ray analysis, the catalyst being further characterized by an added metal content, the added metal being selected from the group consisting essentially of Group VI, Group VIII, Group IVB metals or mixtures thereof.

22. The catalyst of claim 21, wherein the alumina-titania coprecipitated composite is shaped, then calcined, followed by impregnation with one or more metals selected from group consisting essentially of Group VI, Group VIII, Group IVB metals or mixtures thereof.

23. The catalyst of claim 21, wherein the titania content of the coprecipitated composite is in the range from about 10% to about 25% by weight.

24. The catalyst of claim 22, wherein the catalyst is a calcined, extruded, polylobal shape.

9

FIG._IA.

FIG._IB.

FIG._IC.

RELATIVE INTENSITY

2 θ ANGLE OF DIFFRACTION in DEGREES

ANATASE

EP 0 339 640 A1

AVERAGE TiO$_2$ CRYSTALLITE SIZE = 221 A

RELATIVE INTENSITY

2 θ

FIG._2A.

AVERAGE TiO$_2$ CRYSTALLITE SIZE = 837 A

RELATIVE INTENSITY

2 θ

FIG._2B.

AVERAGE TiO$_2$ CRYSTALLITE SIZE < 50 A

RELATIVE INTENSITY

2 θ

FIG._2C.

FIG._3.

EP 0 339 640 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | EP-A-0 218 153 (BASF) <br> * Claims; example 4; column 6, lines 28-33 * | 1-3,5,7 ,8,11 | B 01 J 21/06 <br> B 01 D 53/36 |
| Y | | 4 | |
| Y | EP-A-0 169 953 (DU PONT DE NEMOURS) <br> * Page 3, lines 14-18 * | 4 | |
| A | US-A-4 312 785 (J.-Y. RYU) | | |
| A | US-A-4 141 962 (G. DUPUY) | | |

TECHNICAL FIELDS
SEARCHED (Int. Cl.4)

B 01 J
B 01 D

The present search report has been drawn up for all claims

| Place of search | Date of completion of the search | Examiner |
|---|---|---|
| THE HAGUE | 09-06-1989 | THION M.A. |

EPO FORM 1503 03.82 (P0401)